# EUROPÄISCHE PATENTSCHRIFT

(11) **EP 1 127 677 B1**
(45) Veröffentlichungstag und Bekanntmachung des Hinweises auf die Patenterteilung: **04.05.2005**
(21) Anmeldenummer: 01103880.9
(22) Anmeldetag: 16.02.2001
(51) Int. Cl.: B29C 51/26, B29C 51/22

(54) **Vorrichtung zum Verformen von thermoplastischen Materialien**
Apparatus for shaping thermoplastic materials
Dispositif pour la mise en forme de matériaux thermoplastiques

(30) Priorität: 28.02.2000 DE 10009403
(43) Veröffentlichungstag der Anmeldung: 29.08.2001
(73) Patentinhaber: PAUL KIEFEL GMBH, D-83395 Freilassing (DE)
(72) Erfinder: Stämmler, Gernold, 83435 Bad Reichenhall (DE); Rosenmayer, Kurt, 83404 Feldkirchen (DE); Huber, Reiner, 83395 Freilassing (DE)
(74) Vertreter: Zmyj, Erwin, Dipl.-Ing., Dipl.-Wirtsch.-Ing.

(56) Entgegenhaltungen:
- DE-C- 3 929 135
- US-A- 2 547 275
- US-A- 4 764 241

## Beschreibung

Die Erfindung bezieht sich auf eine Vorrichtung zum Verformen von thermoplastischen Materialien oder zum Kaschieren von Trägerteilen, umfassend mindestens eine ortsbewegliche Trageinrichtung für ein Unterwerkzeug oder eine Formteilaufnahme und mindestens eine ortsbewegliche Trageinrichtung für ein Oberwerkzeug sowie einen gegen die Atmosphäre abdichtbaren Kasten zur Aufnahme einer Trageinrichtung mit Unterwerkzeug oder Formteilaufnahme während eines Arbeitsvorganges, wobei für den Transport der zumindest einen Trageinrichtung ein Drehtisch vorgesehen ist, der für jede Trageinrichtung einen Aufnahmeplatz aufweist, und wobei der Aufnahmeplatz von dem jeweils benachbarten Aufnahmeplatz durch eine Trennwand getrennt ist und die eine Öffnung im Kasten bis auf einen geringen Spalt verschließt, wenn sich eine Trageinrichtung in der im Kasten vorgesehenen Arbeitsstation unterhalb eines Oberwerkzeuges befindet.

Eine solche Vorrichtung ist aus der US 2,547,275 bekannt. Dieses Dokument offenbart alle Merkmale des Oberbegriffs des Anspruchs 1.

Beim Formen oder Kaschieren von Teilen, insbesondere von Innenverkleidungsteilen für Automobile sind zur Erzielung eines raschen Arbeitsablaufes zwei Trageinrichtungen für die Aufnahme eines Unterwerkzeuges oder eines Trägerteiles auf jeweils einem Schiebetisch vorgesehen, wobei die Schiebetische abwechselnd in abgedichteter Form in einen Vorblaskasten einfahrbar sind. Hierbei sind die Schiebetische in unterschiedlichen Höhen angeordnet, was zwangsläufig zu einer gewissen Begrenzung der Formteilhöhe oder des Unterwerkzeuges führt, wenn die Formstation insgesamt innerhalb vertretbarer Außenmaße bleiben soll. Weiterhin ist die abdichtbare Verschiebbarkeit der Schiebetische in unterschiedlichen Höhen konstruktiv aufwendig. Ein weiterer wesentlicher Nachteil besteht darin, wenn ein Werkzeugwechsel beim Oberwerkzeug vorgenommen werden soll, da dieses Werkzeug samt dem notwendigen Spannrahmen durch die gesamte Formstation nach unten hindurchgefahren werden muß, was wegen der engen Raumverhältnisse und des hohen Gewichtes beschwerlich ist.

Aufgabe der Erfindung ist es, eine Vorrichtung der eingangs erläuterten Art so auszugestalten, dass bei einer leichten Bedienbarkeit der Vorrichtung, kurzen Zykluszeiten und bei einer praktisch unbeschränkten Formteilhöhe ein rascher Werkzeugwechsel möglich ist.

Diese Aufgabe wird bei einer Vorrichtung der weiter oben angegebenen Art erfindungsgemäß dadurch gelöst, dass für den Transport der zumindest einen Trageinrichtung ein Drehtisch vorgesehen ist, der für jede Trageinrichtung einen Aufnahmeplatz aufweist, der von dem jeweils benachbarten Aufnahmeplatz durch eine Trennwand getrennt ist, die eine Öffnung im Vorblaskasten bis auf einen geringen Spalt verschließt, wenn sich eine Trageinrichtung in der im Vorblaskasten vorgesehenen Arbeitsstation unterhalb eines Oberwerkzeuges befindet, und dass der geringe Spalt zwischen der Trennwand und der Vorblaskastenwand durch eine Dichtung abdichtbar ist.

Ein wesentlicher Vorteil dieser erfindungsgemäßen Ausgestaltung besteht darin, dass nach dem Einfahren eines Werkzeuges oder eines Trägerteiles in den Vorblaskasten dieser durch die Trennwand und die dazugehörige Dichtung in kürzester Zeit nach dem Erreichen der Arbeitsposition des Werkzeuges oder Trägerteiles in dem Vorblaskasten, abgedichtet und deshalb einsatzfähig ist, und dass der außerhalb des Vorblaskastens verbleibende Aufnahmeplatz sofort mit einem neuen Trägerteil belegt werden kann. Gegenüber einer Vorrichtung mit Schiebetisch hat dies den Vorteil, dass bei gleicher Taktzeit diejenige Zeit, die für das Einlegen des Trägerteils verbleibt, bei der erfindungsgemäßen Ausgestaltung wesentlich länger ist als bei der bekannten Schiebetischausführung, denn bei der Anordnung von Schiebetischen ist es notwendig, entsprechende Schließklappen in die Schließposition zu bringen, um den Vorblaskasten abzudichten. Während dieser Zeit kann die Bedienungsperson den neu zu belegenden Aufnahmeplatz aus Sicherheitsgründen nicht erreichen. Weiterhin besteht ein Vorteil darin, dass sämtliche Aufnahmeplätze in gleicher Höhe bleiben und zwar in der Ebene des Drehtisches, während bei einer Vorrichtung mit Etagen-Schiebetischen die Arbeitshöhe jeweils wechselt. Weiterhin besteht praktisch keine Beschränkung hinsichtlich der Formteilhöhe, was bei der Ausgestaltung mit Schiebetischen der Fall ist, denn dort kann der Abstand zwischen den beiden Schiebetischen nicht beliebig groß gewählt werden, was zwangsläufig zu einer Beschränkung der Formteilhöhe führt. Kernpunkt der Erfindung ist dabei die Anordnung einer Trennwand in Verbindung mit einer Dichtung, die einen Aufnahmeplatz von benachbarten Aufnahmeplätzen trennt, wobei diese Trennwand die Durchlassöffnung für ein Unterwerkzeug oder ein Trägerteil im Vorblaskasten verschließt, so dass im Vorblaskasten sowohl ein Unterdruck als auch ein Überdruck je nach der vorgesehenen Arbeitsweise aufgebaut werden kann. Mit dem Ausdruck Trageinrichtung ist beispielsweise eine Grundplatte für ein Formwerkzeug oder ein Trägerteil gemeint.

Vorzugsweise ist die Dichtung an der ortsfesten Vorblaskastenwand angeordnet und gegen die Trennwand andrückbar.

Die Dichtung kann aber auch an der Trennwand angeordnet und gegen den ortsfesten Vorblaskasten andrückbar sein.

Eine besonders bevorzugte Ausgestaltung der Erfindung besteht darin, dass die Dichtung als elastische Dichtung ausgebildet und in einer Nut der Vorblaskastenwand entlang des Öffnungsrandes angeordnet ist und dass die Dichtung durch ein Druckmedium gegen die Trennwand andrückbar ist. Die Anordnung der Dichtung in der feststehenden Wand des Vorblaskastens hat den Vorteil der festen Anordnung von Zuführungsleitungen für das Druckmittel, um die Dichtung gegen die Trennwand drücken zu können. Wenn die Dichtung elastisch genug ausgebildet ist, zieht sie sich von selbst aufgrund der Elastizität wieder in den Ausgangszustand zurück, so dass beim Drehen des Drehtisches die Dichtung keiner Reibwirkung unterliegt.

Um die Wirkung des Zurückziehens der Dichtung für den Drehvorgang des Drehtisches zu verstärken, kann es vorteilhaft sein, wenn die Dichtung nach Abschalten des Druckmediums einer Rückstellkraft unterworfen ist. Diese kann beispielsweise dadurch erzeugt werden, dass die Dichtung durch Unterdruck beaufschlagbar ist. So kann zum Beispiel die Basis der Nut, in der eine elastische Dichtung geführt ist, an eine Unterdruckquelle angeschlossen werden, wodurch die Dichtung stärker und schneller in die Nut zurückgezogen wird und von der Trennwand freikommt, wodurch sie den Drehvorgang nicht behindert und auch keiner Abnutzung durch das Drehen des Drehtisches unterworfen ist. Durch das rasche Zurückziehen der Dichtung kann der Drehvorgang früher einsetzen, was eine kürzere Zykluszeit mit sich bringt.

Eine besonders einfache Ausgestaltung ergibt sich, wenn die Dichtung als Schlauchdichtung ausgebildet ist und das Schlauchinnere an eine Druckquelle und/oder eine Unterdruckquelle anschließbar ist.

Eine konstruktiv einfache Ausgestaltung des Drehtisches und seiner Abdichtung ergibt sich in vorteilhafter Weise dadurch, dass der Drehtisch an der Unterseite ein Drehlager und einen Drehantrieb aufweist, dass die dem Drehlager zugewandte Wand des Vorblaskastens eine Einbuchtung bildend um das Drehlager und den Drehantrieb herumgeführt ist und dass die Trennwand im Bereich der Einbuchtung an ihren beiden Seiten einen diese Einbuchtung überdeckenden Flansch aufweist, der mit der an der Wand des Vorblaskastens angeordneten Dichtung zusammenwirkt. Hierdurch ist es möglich eine ununterbrochene, durchlaufende Dichtung in der Wand des Vorblaskastens anzuordnen, was nicht nur konstruktiv einfacher, sondern auch betriebssicherer ist.

Um einen Werkzeugwechsel, sei es beim Drehtisch oder beim Obertisch, in einfacher Weise vornehmen zu können, ist in weiterer vorteilhafter Ausgestaltung der Erfindung vorgesehen, dass der Drehtisch an jedem Aufnahmeplatz zwei für die Aufnahme einer Trageinrichtung für ein Unterwerkzeug oder ein Trägerteil dienende Auflagen aufweist, die aus einer Haltestellung für die Trageinrichtung in eine Durchlaßstellung überführbar sind, in welcher ein Werkzeugwechsel mit Absenkung der Trageinrichtung durchführbar ist. Mit Hilfe eines zusätzlichen Hubtisches kann dann nicht nur das Unterwerkzeug, sondern auch nachfolgend das auf die Aufnahmen abgesenkte Oberwerkzeug in der Arbeitsstellung des Drehtisches in der Arbeitsstation abgeholt und somit ein vollständiger Werkzeugwechsel samt Spannrahmenwechsel durchgeführt werden.

Oberhalb des Drehtisches können beliebige Anordnungen der Oberwerkzeuge vorgesehen sein. So kann beispielsweise ein Oberwerkzeug an einem oberhalb des Drehtisches angeordneten oberen Hubtisch angeordnet sein. Hierbei handelt es sich um die Anordnung eines einzigen Oberwerkzeuges, das mit beispielsweise zwei auf dem Drehtisch angeordneten Unterwerkzeugen im Wechsel zusammenarbeitet.

Bei Verwendung mehrerer Oberwerkzeuge können diese jeweils einem Schiebetisch zugeordnet sein, der höhenbeweglich ist.

Eine vorteilhafte Kombination mit der Ausgestaltung des Drehtisches und seinen Möglichkeiten der Anordnung verschiedener Unterwerkzeuge besteht darin, dass Oberwerkzeuge an einer drehbar und antreibbar gelagerten Werkzeugaufnahme angeordnet sind. Dabei kann die Werkzeugaufnahme höhenbeweglich sein.

Die Erfindung wird nachfolgend anhand eines in der Zeichnung dargestellten Ausführungsbeispieles näher erläutert. In der Zeichnung zeigen:

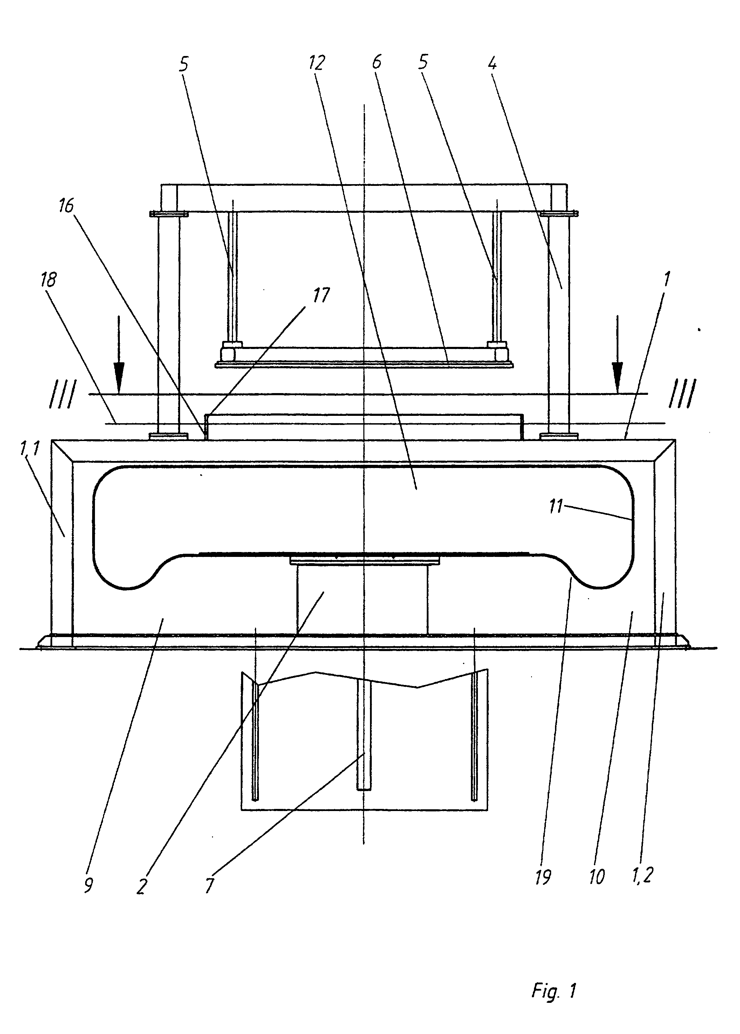

- **Figur 1:**: eine Vorderansicht einer Vorrichtung zum Verformen von thermoplastischen Materialen oder Kaschieren von Trägerteilen;

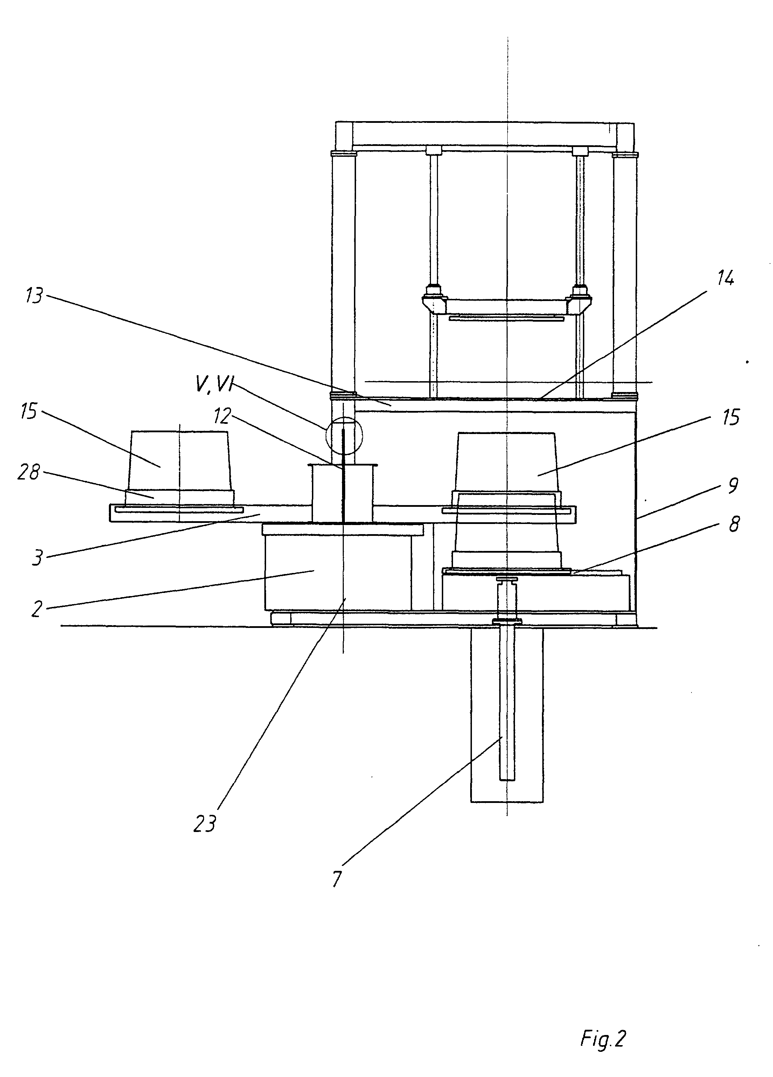

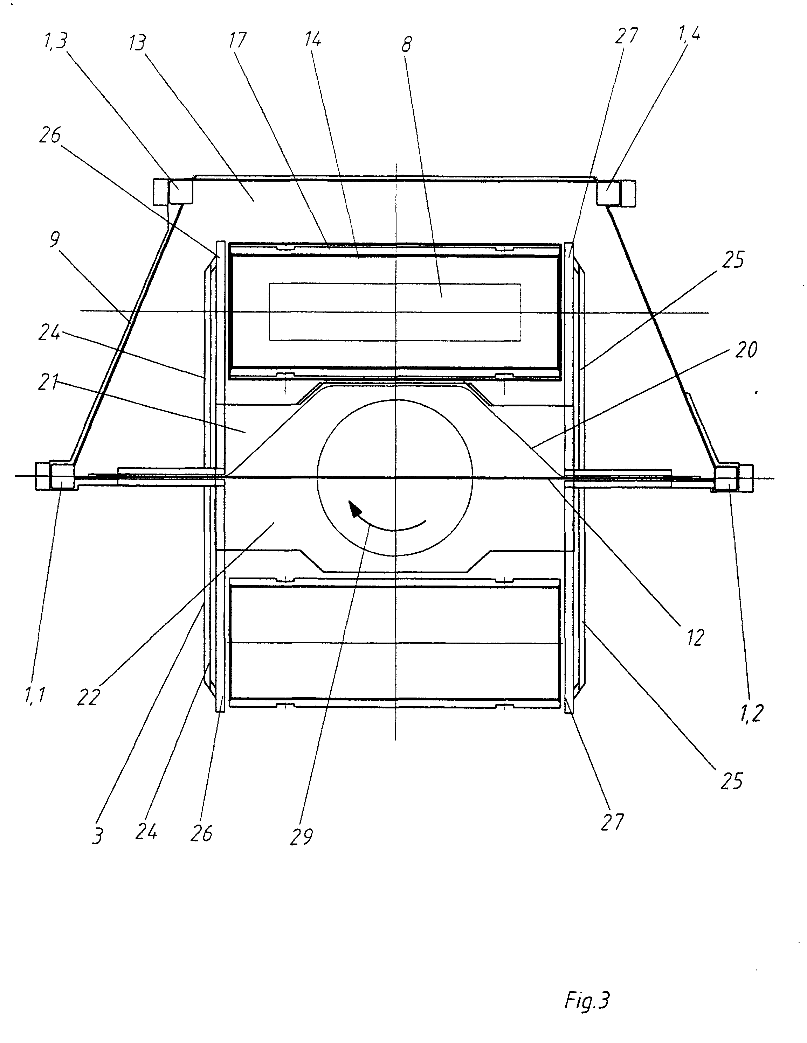

- **Figur 2:**: eine Seitenansicht der Vorrichtung nach Figur 1;
- **Figur 3:**: einen Schnitt nach der Linie III-III in Figur 1;
- **Figur 4:**: eine der Figur 2 entsprechende Seitenansicht einer Vorrichtung in geänderter Ausgestaltung; und
- **Figuren 5 und 6:**: eine Einzelheit des in Figur 2 mit V und VI bezeichneten Bereiches in vergrößerter Darstellung in zwei unterschiedlichen Betriebsstellungen.

Die Vorrichtung zur Verformung von thermoplastischen Materialien oder zum Kaschieren von Trägerteilen entweder mit thermoplastischen Materialien oder auch mit anderen Materialien, beispielsweise beschichteten Geweben, weist ein Grundgestell 1 auf, innerhalb dessen ein Drehantrieb 2 für einen Drehtisch 3 angeordnet ist. Auf dem Grundgestell 1 ist ein Obergestell 4 angeordnet, das an entsprechenden Führungen 5 einen Obertisch 6 in vertikaler Richtung verschiebbar hält.

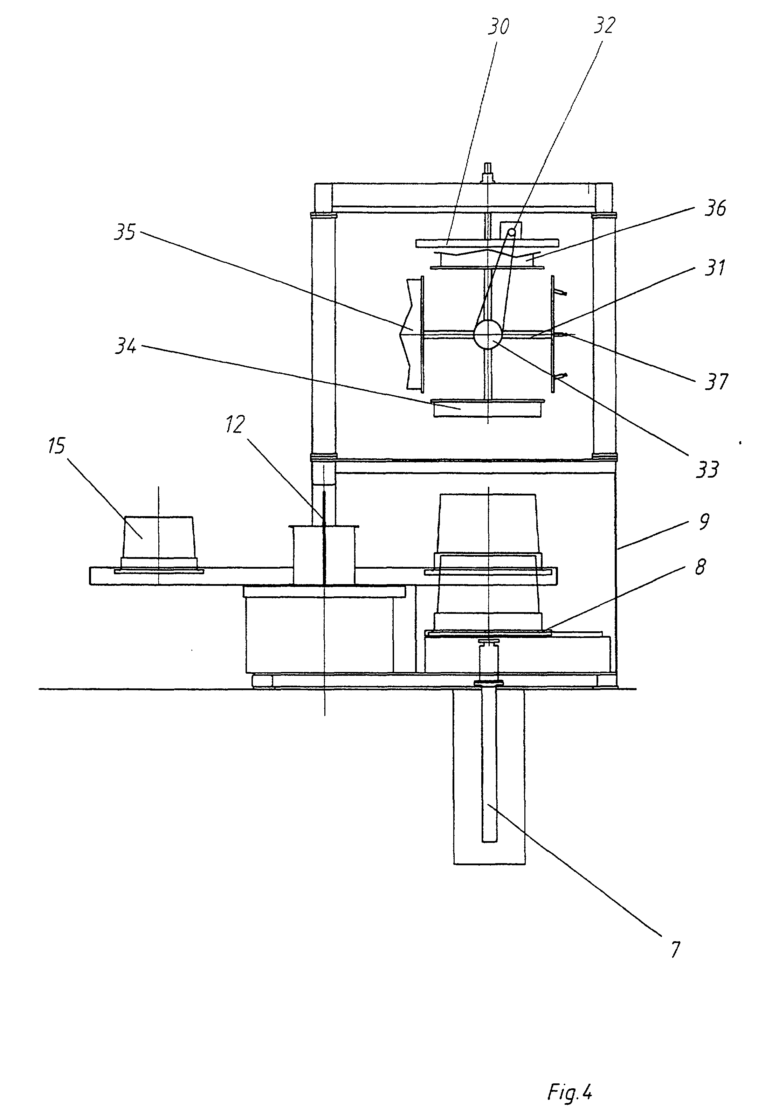

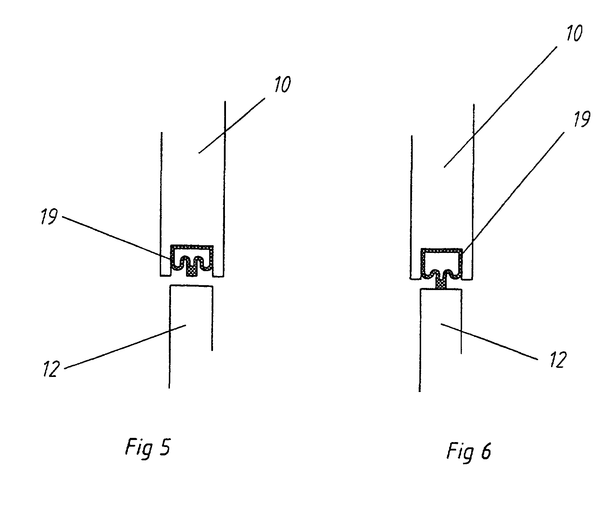

Unterhalb der Aufstandsebene des Grundgestelles 1, also innerhalb des Bodens unter der Vorrichtung, ist eine Hubvorrichtung 7 für einen unteren Hubtisch 8 vorgesehen. Innerhalb des Grundgestelles 1, das vier Eckpfosten 1.1 bis 1.4 aufweist, ist ein Vorblaskasten 9 ausgebildet, der in seiner Vorderwand 10 eine Öffnung 11 aufweist, die sich nahezu über die gesamte Vorderwand 10 zwischen den Eckpfosten 1.1 und 1.2 erstreckt, die durch eine Trennwand 12 verschließbar ist, die fest auf dem Drehtisch 3 angeordnet und zusammen mit diesem verdrehbar ist. Oberhalb des Vorblaskastens 9, d.h. oberhalb seiner Decke 13, die mit einer Öffnung 14 für den Durchtritt des Unterwerkzeuges oder eines Trägerteiles 15 vorgesehen ist, sind ein Unterspannrahmen 16 und ein Oberspannrahmen 17 angeordnet, die eine mit strichpunktierter Linie angedeutete Folie 18 zwischen sich einspannen, so dass der Vorblaskasten 9 nach oben einerseits durch seine Decke 13 und andererseits durch die Folie 18 im Bereich der Öffnung 14 abgedichtet ist. Damit der Vorblaskasten 9 auch im Bereich der Öffnung 11, die im wesentlichen durch die Trennwand 12 geschlossen ist, auch luftdicht verschließbar ist, ist an der die Öffnung 12 aufweisenden Vorderwand 10 des Vorblaskastens eine Dichtung 19 vorgesehen, die umlaufend angeordnet ist. Da im Zentrum des Drehtisches 3 der Drehantrieb 2 mit der entsprechenden Lagerung für den Tisch vorgesehen ist, ist die Vorderwand 10 nicht in einer Ebene verlaufend angeordnet, sondern diese Vorderwand 10 weist eine Einbuchtung 20 auf, die in Figur 3 mit einer strichpunktierten Linie angedeutet ist. Diese Einbuchtung umgibt den Drehantrieb, so dass dieser außerhalb des Vorblaskastens liegt. Die Dichtung 19 folgt dieser Einbuchtung, so dass die Öffnung 11 vollständig mit einer Dichtung versehen ist, die sich in einer Nut innerhalb der Vorderwand 10 befindet und mittels eines Druckmittels aus dieser Nut heraus und gegen die Trennwand 12 andrückbar ist. Diese Dichtung ist als Schlauchdichtung ausgebildet und ist mit einer Druckquelle verbunden. Um die Dichtung wieder lösen zu können, damit die Trennwand 12 beim Drehen des Drehtisches nicht an der Dichtung reibt, ist diese Schlauchdichtung auch an eine Unterdruckquelle anschließbar, so dass sie sehr schnell aus ihrer dichtenden Lage wieder zurückgezogen werden kann. In dieser zurückgezogenen Lage kann dann der Drehtisch zusammen mit der Trennwand verdreht werden, ohne dass hierbei die Dichtung beschädigt wird. Damit trotz der Einbuchtung 20 eine Abdichtung der Öffnung 11 erfolgen kann, ist an der Unterkante der Trennwand 12 nach jeder Seite hervorragend ein Flansch 21 und 22 angeordnet, der, wie aus Figur 3 ersichtlich, die Einbuchtung 20 vollständig überdeckt, so dass die in diesem Bereich vorgesehene Dichtung 19 von unten gegen den jeweiligen Flansch drückt, der sich im Bereich dieser Einbuchtung der Vorderwand des Vorblaskastens befindet. In den Figuren 5 und 6 ist die Dichtung 19 in der zurückgezogenen und der aufgeblasenen Stellung gezeigt, wobei entsprechend Figur 5 die in ihrem zurückgezogenen Zustand befindliche Dichtung ein Drehen der Trennwand 12 ermöglicht. Figur 6 zeigt einen aufgeblasenen Zustand der in der Vorderwand 10 eingelassenen Dichtung während der Ruhestellung der drehbaren Trennwand 12 um eine Abdichtung des Spaltes zwischen der Vorderwand 10 und der Trennwand 12 zu ermöglichen.

Der Drehtisch 3 weist zu beiden Seiten des mit der Linie 23 bezeichneten Symmetrieachse, die auch durch das Drehzentrum geht, jeweils zwei parallele Schienen 24 und 25 auf, die mit schwenkbaren Auflagen 26 und 27 ausgerüstet sind. In der in Figur 3 dargestellten Haltestellung der Auflagen 26 und 27 dienen diese Auflagen zur Aufnahme einer Trageinrichtung 28, d.h. einer Grundplatte, für ein Trägerteil 15 oder ein Unterwerkzeug, das in der Zeichnung nicht dargestellt ist. In einer hochgeklappten, in der Zeichnung nicht dargestellten Stellung ermöglichen die Auflagen 26 und 27 das Aufnehmen der Trageinrichtung 28, um diese nach unten zusammen mit einem Formwerkzeug und Spannrahmen absenken zu können, wenn sich der entsprechende Aufnahmeplatz des Drehtisches 3 im Vorblaskasten 9 befindet, um so einen Werkzeugwechsel durchführen zu können.

Die Arbeitsweise der Vorrichtung wird nachfolgend erläutert. Das auf einer Trageinrichtung 28, d.h. auf einer Grundplatte befindliche Unterwerkzeug oder das zu kaschierende Trägerteil 15 wird nach seiner Ablage auf dem Drehtisch 3 durch Verdrehen des Drehtisches in Richtung des Pfeiles 29 in den Vorblaskasten 9 eingefahren und in die innerhalb des Vorblaskastens befindliche Arbeitsposition unterhalb des Obertisches 6 gebracht. In der Zwischenzeit ist die Folie 18 mittels nicht dargestellter Nadelketten zwischen den Unterspannrahmen 16 und den Oberspannrahmen 17 gebracht worden, wodurch nach dem Zusammenfahren der Spannrahmen der Vorblaskasten 9 im Bereich der Öffnung 14 nach oben abgedichtet ist. Die Abdichtung an der Vorderwand 10 erfolgt durch die Trennwand 12, den Flansch 21 bzw. 22 und die umlaufende Dichtung 19, die im aufgeblasenen Zustand gegen die Trennwand drückt und somit den Vorblaskasten im Bereich der Öffnung 11 abdichtet. Hierauf wird, je nach Arbeitsweise, entweder Druckluft in den Vorblaskasten eingeblasen oder der Vorblaskasten wird einem leichten Vakuum unterworfen. Je nachdem, ob der Vorblaskasten an eine Überdruckquelle oder eine Unterdruckquelle angeschlossen ist, wird die bereits vorher erwärmte Folie 18 entweder nach oben in Richtung auf den Obertisch 6 ausgebeult oder nach unten in den Vorblaskasten hineingesaugt. Dann wird mit Hilfe eines Untertisches 8 die Trageinrichtung 28 mit dem Unterwerkzeug bzw. einem Trägerteil 15 nach oben gegen die Folie 18 gedrückt und die Folie wird in diesem Zustand mittels an die Trageinrichtung anschließbarem Unterdruck gegen das Trägerteil 15 oder ein entsprechendes Unterwerkzeug angesaugt und dabei verformt. Am Obertisch 6 kann ein entsprechend dem Unterwerkzeug oder dem Trägerteil 15 ausgebildetes Oberwerkzeug vorgesehen sein oder es können Formhilfen vorgesehen sein, die an besonders kritischen Stellen das Andrücken der Folie an das Unterwerkzeug bzw. das Trägerteil 15 bewirken. Zu diesem Zweck ist der Obertisch 6 in der Höhe verfahrbar. Nach diesem Formvorgang wird mit Hilfe eines Stanzwerkzeuges, das ebenfalls am Obertisch 6 angeordnet ist, das fertig geformte Teil aus der Folie 18 ausgestanzt und das Unterwerkzeug mittels des Untertisches 8 auf dem Drehtisch 3 abgelegt. Hierauf wird der Drehtisch wieder gedreht, so dass das fertige Formteil an der Bedienerseite, die sich außerhalb des Vorblaskastens 9 befindet, entnommen werden kann. Hierauf kann wieder ein neues Trägerteil aufgelegt werden.

Figur 4 zeigt eine abgeänderte Ausführungsform, wobei die Abänderung darin besteht, dass an einem in der Höhe verschiebbaren Obertisch 30 eine Halteeinrichtung für ein Drehkreuz 31, bzw. eine drehbare Werkzeugaufnahmeeinrichtung, z.B. in Form eines quadratischen Rahmens, vorgesehen ist, das mittels eines Antriebes 32 um eine Achse 33 antreibbar ist. Das Drehkreuz weist vier Arme auf, an deren Enden unterschiedliche Werkzeuge 34 bis 37 angeordnet sind. Diese unterschiedlichen Werkzeuge sind jeweils ein Formhilfewerkzeug, z.B. eine Vorblas- oder Vorsaugschale, ein Stanzwerkzeug oder eine starre oder angetriebene Formhilfe, die je nach Bedarf mit dem herzustellenden Formteil, das sich auf dem Unterwerkzeug bzw. Trägerteil befindet, in Eingriff gebracht wird.

Eine solche Mehrfachanordnung von Werkzeugen an einem Drehkrenz ist in der DE 3 929 135 C1 beschrieben.

## Patentansprüche

1. Vorrichtung zum Verformen von thermoplastischen Materialien oder zum Kaschieren von Trägerteilen, umfassend mindestens eine ortsbewegliche Trageinrichtung für ein Unterwerkzeug oder eine Formteilaufnahme und mindestens eine ortsbewegliche Trageinrichtung für ein Oberwerkzeug sowie einen gegen die Atmosphäre abdichtbaren Kasten zur Aufnahme einer Trageinrichtung mit Unterwerkzeug oder Formteilaufnahme während eines Arbeitsvorganges, wobei für den Transport der zumindest einen Trageinrichtung (28) ein Drehtisch (3) vorgesehen ist, der für jede Trageinrichtung (28) einen Aufnahmeplatz aufweist, und wobei jeder Aufnahmeplatz von dem jeweils benachbarten Aufnahmeplatz durch eine Trennwand (12) getrennt ist und die eine Öffnung (11) im Kasten (9) bis auf einen geringen Spalt verschließt, wenn sich eine Trageinrichtung in der im Kasten vorgesehenen Arbeitsstation unterhalb eines Oberwerkzeuges befindet, **dadurch gekennzeichnet, dass** der Kasten ein Vorblaskasten ist, und dass der geringe Spalt zwischen der Trennwand (12) und der Vorblaskastenwand (10) durch eine Dichtung (19) abdichtbar ist.

2. Vorrichtung nach Anspruch 1, wobei die Dichtung (19) an der ortsfesten Vorblaskastenwand (10) angeordnet und gegen die Trennwand (12) andrückbar ist.

3. Vorrichtung nach Anspruch 1, wobei die Dichtung (19) an der Trennwand (12) angeordnet und gegen den ortsfesten Vorblaskasten (9) andrückbar ist.

4. Vorrichtung nach einem der Ansprüche 1 bis 3, wobei die Dichtung (19) als elastische Dichtung ausgebildet und in einer Nut der Vorblaskastenwand (10) entlang des Öffnungsrandes angeordnet ist, und dass die Dichtung (19) durch ein Druckmedium gegen die Trennwand (12) andrückbar ist.

5. Vorrichtung nach Anspruch 4, wobei die Dichtung (19) nach Abschalten des Druckmediums einer Rückstellkraft unterworfen ist.

6. Vorrichtung nach Anspruch 4 oder 5, wobei die Dichtung (19) durch Unterdruck beaufschlagbar ist.

7. Vorrichtung nach einem der Ansprüche 1 bis 6, wobei die Dichtung (19) als Schlauchdichtung ausgebildet ist und das Schlauchinnere an eine Druckquelle und/oder eine Unterdruckquelle anschließbar ist.

8. Vorrichtung nach einem der Ansprüche 1 bis 7, wobei der Drehtisch (3) an der Unterseite ein Drehlager und einen Drehantrieb (2) aufweist, dass die dem Drehlager zugewandte Wand (10) des Vorblaskastens (9) eine Einbuchtung (20) bildend, um das Drehlager und den Drehantrieb (2) herumgeführt ist, und dass die Trennwand (12) im Bereich der Einbuchtung (20) an ihren beiden Seiten einen diese Einbuchtung überdeckenden Flansch (21, 22) aufweist, der mit der an der Wand (10, 20) des Vorblaskastens (9) angeordneten Dichtung (19) zusammenwirkt.

9. Vorrichtung nach einem der Ansprüche 1 bis 8, wobei der Drehtisch (3) an jedem Aufnahmeplatz zwei für die Aufnahme einer Trageinrichtung (28) für ein Unterwerkzeug oder ein Trägerteil (15) dienende Auflagen (26, 27) aufweist, die aus einer Haltestellung für die Trageinrichtung (28) in eine Durchlassstellung überführbar sind, in welcher ein Werkzeugwechsel mit Absenkung der Trageinrichtung (28) durchführbar ist.

10. Vorrichtung nach einem der Ansprüche 1 bis 8, wobei ein Oberwerkzeug an einem oberhalb des Drehtisches (3) angeordneten Hubtisch (6) angeordnet ist.

11. Vorrichtung nach einem der Ansprüche 1 bis 8, wobei bei Verwendung mehrerer Oberwerkzeuge diese jeweils einem Schiebetisch zugeordnet sind, der höhenbeweglich ist.

12. Vorrichtung nach einem der Ansprüche 1 bis 8, wobei Oberwerkzeuge an einer drehbar und antreibbar gelagerten Werkzeugaufnahme (31) angeordnet sind.

13. Vorrichtung nach Anspruch 12, wobei die Werkzeugaufnahme (31) höhenbeweglich ist.

## Claims

1. Apparatus for shaping thermoplastic materials or for laminating backing parts, comprising at least one locationally movable supporting device for a lower mould or a moulding receptacle and at least one locationally movable supporting devi ce for an upper mould and also a box which can be sealed off with respect to the atmosphere for receiving a supporting device with a lower mould or moulding receptacle during an operating procedure, a turntable (3) being provided for transporting the at le ast one supporting device (28), which turntable has a receiving place for each supporting device (28), and each receiving place being separated from the respectively neighbouring receiving place by a separating wall (12) which closes an opening (11) in the box (9), apart from a small gap, when a supporting device is located underneath an upper mould in the working station provided in the box, **characterized in that** the box is a preliminary blowing box and **in that** the small gap between the separating wall (12 ) and the wall (10) of the preliminary blowing box is able to be sealed off by a seal (19).

2. Apparatus according to Claim 1, the seal (19) being arranged on the fixed wall (10) of the preliminary blowing box and able to be pressed against the separating wall (12).

3. Apparatus according to Claim 1, the seal (19) being arranged on the separating wall (12) and able to be pressed against the fixed preliminary blowing box (9).

4. Apparatus according to one of Claims 1 to 3, the seal (19) being formed as a flexible seal and arranged in a groove of the wall (10) of the preliminary blowing box along the rim of the opening, and the seal (19) being able to be pressed against the separating wall (12) by a pressure medium.

5. Apparatus according to Claim 4, the seal (19) being subjected to a restoring force after the pressure medium is switched off.

6. Apparatus according to Claim 4 or 5, the seal (19) being able to be subjected to negative pressure.

7. Apparatus according to one of Claims 1 to 6, the seal (19) being formed as a tubular seal and the interior of the tube being able to be connected to a pressure source and/or a negative pressure source.

8. Apparatus according to one of Claims 1 to 7, the turntable (3) having on the underside a rotary bearing and a rotary drive (2), the wall (10) of the preliminary blowing box (9) that is facing the rotary bearing being led around the rotary bearing and the rotary drive (2) in such a way that it forms an indentation (20) and the separating wall (12) having in the r egion of the indentation (20) on both its sides a flange (21, 22) which covers this indentation and interacts with the seal (19) arranged on the wall (10, 20) of the preliminary blowing box (9).

9. Apparatus according to one of Claims 1 to 8, the turntable (3) having at each receiving place two rests (26, 27), which serve for receiving a supporting device (28) for a lower mould or a backing part (15) and are able to be transferred from a holding position for the supporting device (28) into a letting -through position, in which a mould change can be carried out by lowering of the supporting device (28).

10. Apparatus according to one of Claims 1 to 8, an upper mould being arranged on a lifting table (6) arranged above the turntable (3).

11. Apparatus according to one of Claims 1 to 8, upper moulds being respectively assigned to a sliding table which is vertically movable when a plurality of upper moulds are used.

12. Apparatus according to one of Claims 1 to 8, upper moulds being arranged on a mould recepta cle (31) which is mounted in such a way that it can be rotated and driven.

13. Apparatus according to Claim 12, the mould receptacle (31) being vertically movable.

## Revendications

1. Dispositif pour la mise en forme de matériaux thermoplastiques ou pour le laminage de pièces de support, comprenant au moins un dispositif de support mobile pour un outil inférieur ou un logement de pièce de moule et au moins un dispositif de support mobile pour un outil supérieur ainsi qu'une caisse pouvant être rendue étanche vis-à-vis de l'atmosphère pour recevoir un dispositif de support avec un outil inférieur ou un logement de pièce de moule pendant une opération de travail, une table tournante (3) étant prévue pour le transport de l'au moins un dispositif de support (28), laquelle présente pour chaque dispositif de support (28) une place de réception et chaque place de réception étant séparée de la place de réception voisine respective par une paroi de séparation (12) et qui ferme une ouverture (11) dans la caisse (9) jusqu'à ce qu'il ne subsiste qu'une fente étroite lorsqu'un dispositif de support se trouve dans le poste de travail prévu dans la caisse en dessous d'un outil supérieur, **caractérisé en ce que** la caisse est une caisse de présoufflage et **en ce que** la fente étroite entre la paroi de séparation (12) et la paroi de la caisse de présoufflage (10) peut être rendue étanche par un joint d'étanchéité (19).

2. Dispositif selon la revendication 1, dans lequel le joint d'étanchéité (19) est disposé au niveau de la paroi de la caisse de présoufflage (10) fixe et peut être pressé contre la paroi de séparation (12).

3. Dispositif selon la revendication 1, dans lequel le joint d'étanchéité (19) est disposé au niveau de la paroi de séparation (12) et peut être pressé contre la caisse de présoufflage fixe (9).

4. Dispositif selon l'une quelconque des revendications 1 à 3, dans lequel le joint d'étanchéité (19) est réalisé sous forme de joint d'étanchéité élastique et est disposé dans une rainure de la paroi de la caisse de présoufflage (10) le long du bord de l'ouverture et en ce que le joint d'étanchéité (19) peut être pressé par un fluide sous pression contre la paroi de séparation (12).

5. Dispositif selon la revendication 4, dans lequel le joint d'étanchéité (19) est soumis à une force de rappel après la coupure du fluide sous pression.

6. Dispositif selon la revendication 4 ou 5, dans lequel le joint d'étanchéité (19) peut être sollicité par une dépression.

7. Dispositif selon l'une quelconque des revendications 1 à 6, dans lequel le joint d'étanchéité (19) est réalisé sous la forme d'un joint d'étanchéité tubulaire et l'intérieur du tube peut être raccordé à une source de pression et/ou à une source de dépression.

8. Dispositif selon l'une quelconque des revendications 1 à 7, dans lequel la table tournante (3) présente au niveau du côté inférieur un palier rotatif et un entraînement en rotation (2), la paroi (10) de la caisse de présoufflage (9) tournée vers le palier rotatif, est guidée autour du palier rotatif et de l'entraînement en rotation (2) en formant un renfoncement (20), et la paroi de séparation (12) présente, dans la région du renfoncement (20), au niveau de ses deux côtés, une bride (21, 22) recouvrant ce renfoncement, laquelle coopère avec le joint d'étanchéité (19) disposé sur la paroi (10, 20) de la caisse de présoufflage (9).

9. Dispositif selon l'une quelconque des revendications 1 à 8, dans lequel la table tournante (3) présente sur chaque place de réception, deux appuis (26, 27) servant à recevoir un dispositif de support (28) pour un outil inférieur ou une partie de support (15), ces appuis pouvant être transférés d'une position de maintien pour le dispositif d e support (28) dans une position de passage, dans laquelle un changement d'outil peut être réalisé en abaissant le dispositif de support (28).

10. Dispositif selon l'une quelconque des revendications 1 à 8, dans lequel un outil supérieur est disposé sur une table de levage (6) disposée au-dessus de la table tournante (3).

11. Dispositif selon l'une quelconque des revendications 1 à 8, dans lequel, lorsque l'on utilise plusieurs outils supérieurs, ceux-ci sont à chaque fois associés à une table coulissante qui est déplaçable en hauteur.

12. Dispositif selon l'une quelconque des revendications 1 à 8, dans lequel des outils supérieurs sont disposés sur un logement d'outil (31) rotatif et monté de manière à pouvoir être entraîné.

13. Dispositif selon la reve ndication 12, dans lequel le logement d'outil (31) est déplaçable en hauteur.
